# EUROPÄISCHE PATENTSCHRIFT

(11) **EP 1 653 104 B1**
(45) Veröffentlichungstag und Bekanntmachung des Hinweises auf die Patenterteilung: **16.09.2009**
(21) Anmeldenummer: 05023353.5
(22) Anmeldetag: 26.10.2005
(51) Int. Cl.: F16D 13/70, F16D 65/12

(54) **Kupplungs- oder Bremsvorrichtung**
Clutch or brake device
Dispositif de frein ou d'embrayage

(30) Priorität: 02.11.2004 DE 102004052841; 12.05.2005 DE 102005021976
(43) Veröffentlichungstag der Anmeldung: 03.05.2006
(73) Patentinhaber: ZF Friedrichshafen AG, 88046 Friedrichshafen (DE)
(72) Erfinder: Dörfler, Matthias, 97453 Schonungen (DE); Klein, Sascha, Dr., 63916 Amorbach (DE)

(56) Entgegenhaltungen:
- EP-B1- 0 797 555
- US-A1- 3 835 118
- US-A1- 2001 052 373

## Beschreibung

Die Erfindung betrifft eine Kupplungs- oder Bremsvorrichtung, die mindestens einen scheibenförmigen Körper aufweist, der zur Erzeugung einer Reibkraft mit einem Reibelement in Kontakt bringbar ist oder der als Reibelement eingesetzt wird.

Kupplungsvorrichtungen dieser Art sind im Stand der Technik allgemein bekannt. Es wird exemplarisch auf die DE 195 03 738 C1 hingewiesen, wo eine Kupplungsvorrichtung offenbart ist, bei der eine mit einem Reibbelag versehene Kupplungsscheibe zwischen einer Anpressplatte und einem Schwungrad angeordnet ist. Durch Beaufschlagung der Anpressplatte mit einer axial wirkenden Kraft wird Reibschluss zwischen Anpressplatte, Kupplungsscheibe und Schwungrad hergestellt, wodurch ein Drehmoment übertragen werden kann. Dabei wirkt zwischen zwei Reibpartnern, also einerseits zwischen der Anpressplatte und der Kupplungsscheibe und andererseits zwischen der Kupplungsscheibe und dem Schwungrad, eine Reibkraft, die sich aus dem Produkt aus Anpresskraft und Reibkoeffizient ergibt.

Rotierende, scheibenförmige Körper, die in Kupplungs- bzw. Bremseinrichtungen eingesetzt werden, sind im Betrieb erheblichen Fliehkräften ausgesetzt, so dass sie entsprechend stabil dimensioniert werden müssen. Daneben ist es wichtig, dass die Körper in der Regel auch ein gutes Wärmeleitvermögen haben müssen, um die durch Reibung eingebrachte Energie abführen zu können. Zumeist werden Anpressplatten und Schwungscheiben von Kupplungsvorrichtungen aus Stahlguss hergestellt. Häufig verwendetes Gussmaterial ist beispielsweise GG, GGV oder GGG, wobei insbesondere auf den Gusswerkstoff GGV-30/-35 hingewiesen wird.

Die Berstfestigkeit der scheibenförmigen, rotierenden Körper in Kupplungs- und Bremsvorrichtungen ist damit materialbedingt begrenzt.

Als metallischer Leichtbaustoff sind Metallschwämme bzw. Metallschäume verfügbar, die eine poröse Struktur aufweisen. Dabei sind in das Metall Poren eingebracht, deren Volumen über 50 % des Metallkörpers ausmachen kann. Als Grundstoff für derartige Metallschwämme bzw. -schäume können beliebige Metalle zur Anwendung kommen, beispielsweise Stahl oder Aluminium. Derartige Werkstoffe werden bereits im Maschinen- und Fahrzeugbau eingesetzt. Zum technologischen Hintergrund wird exemplarisch auf F. Grote, P. Busse: "Gießtechnische Herstellung offenporiger Metallschwämme mittels mineralischer Platzhalter", Materialwissenschaft und Werkstofftechnik, 31 (2000) 6, S. 415 - 418, hingewiesen.

Zur Erhöhung der Berstfestigkeit wird aus US 3835118, das als nächstliegender Stand der Technik gesehen wird, eine Bremsvorrichtung offenbart, wobei ein Bremsbelag verwendet wird, der sich zusammensetzt aus Mettalpulver, Stahl-Metallschwamm-Pulver, Keramikpulver, Gummipartikel, Stahlfasern, Graphitpartikel, und Phenolarzbinder. Dabei variiert die Größe der Metallschwamm-Partikel zwischen 0,1 und 1 mm.

Der Erfindung liegt die **Aufgabe** zugrunde, rotierende scheibenförmige Körper von Kupplungs- bzw. Bremsvorrichtungen so auszubilden, dass sie eine erhöhte Festigkeit gegen Bersten aufweisen. Gleichzeitig soll sichergestellt werden, dass das Wärmeleitvermögen der scheibenförmigen Körper gut ist. Hierfür soll ein geeignetes Material zur Verfügung gestellt werden.

Die **Lösung** dieser Aufgabe durch die Erfindung ist dadurch gekennzeichnet, dass der scheibenförmige Körper aus einem metallischen, porösen Material besteht, wobei in Hohlräume in diesem Material mindestens ein Einlagerungsmaterial eingebracht ist.

Bevorzugt ist das metallische, poröse Material ein Metallschwamm. Dabei kommt insbesondere als metallisches, poröses Material hochfestes Material zum Einsatz, wobei vor allem an Stahl gedacht ist.

Bei dem erfindungsgemäß vorgesehenen Einlagerungsmaterial kann es sich um Leichtmetall handeln. Es kann insbesondere eine Aluminium- oder Magnesiumverbindung sein. Als Einlagerungsmaterial kommt besonders bevorzugt Aluminiumoxyd (Al₂O₃) oder Slizium-Carbon (SiC) zur Anwendung. Es kann auch vorgesehen werden, dass das Einlagerungsmaterial eine Aluminiumlegierung ist, die Aluminiumoxyd (Al₂O₃) oder Slizium-Carbon (SiC) aufweist.

Ferner kann vorgesehen sein, dass das Einlagerungsmaterial Kohlenstoff (C), insbesondere Graphit, aufweist. Weiterhin kann das Einlagerungsmaterial Kupfer (Cu) aufweisen.

Eine vorteilhafte Weiterbildung sieht vor, dass das Material des scheibenförmigen Körpers anisotrop ausgebildet ist. Unter Anisotropie ist hier zu verstehen, dass sich Materialcharakteristika, insbesondere die Zugfestigkeit, die Elastizität oder ähnliche Parameter, in Abhängigkeit der Raumrichtung ändern, in denen sie gemessen werden. Bei den hier besonders in Rede stehenden scheibenförmigen Körpern heißt dies namentlich, dass die genannten Parameter ― in Radialrichtung gemessen ― andere Werte aufweisen, als senkrecht dazu, d. h. in Umfangsrichtung.

Der scheibenförmige Körper ist mit Vorteil das Schwungrad einer Kupplungsvorrichtung, die Anpressplatte einer Kupplungsvorrichtung, die Kupplungsreibscheibe einer Kupplungsvorrichtung oder die Bremsscheibe einer Bremsvorrichtung.

Der scheibenförmige Körper kann aus mehreren in Umfangsrichtung aufeinanderfolgenden Bereichen gebildet werden. Das metallische, poröse Material ist gemäß einer Weiterbildung zu einzelnen Klötzen geformt, die in ihrer Anordnung einen scheibenförmigen Körper bilden.

Weiterhin kann vorgesehen sein, dass in das metallische, poröse Material nur teilweise ein Einlagerungsmaterial eingebracht ist. Danach kann der poröse Körper also auch nur teilweise mit einem anderen Material ausgefüllt sein. Das metallische, poröse Material kann auch nur teilweise von dem Einlagerungsmaterial durchsetzt sein.

Das metallische poröse Material kann ferner auf der Reibfläche mehr Einlagerungsmaterial enthalten als im übrigen Volumen des Materials. Es kann auf der der Reibfläche entgegengesetzten Fläche weniger Einlagerungsmaterial aufweisen als im übrigen Volumen des Materials. Schließlich kann das Material in Axialrichtung ausgehend von der Reibfläche einen sich verändernden Füllungsgrad für das Einlagerungsmaterial aufweisen; dieser kann in Axialrichtung abnehmend oder ansteigend sein.

Mit der erfindungsgemäßen Lösung wird ein Verbundwerkstoff für einen scheibenförmigen Körper geschaffen, der eine Matrix aus hochfestem Werkstoff (z. B. in Form eines Metallschwammes aus Stahl) aufweist, in die ein zweites Material, nämlich das Einlagerungsmaterial, infiltriert ist. Dabei übernimmt der MatrixWerkstoff (Stahl) überwiegend die Aufgabe der erhöhten mechanischen Festigkeit, während das infiltrierte Material, d. h. der Füllwerkstoff, andere Funktionen übernimmt. Je nach Wahl dieses Einlagerungswerkstoffs, s. oben, kann die Abfuhr und/oder die Speicherung von Wärme als Aufgabe für den Einlagerungswerkstoff vorgesehen werden, die Bereitstellung eines für eine Reibpaarung wichtigen Zusatzstoffs wie Graphit, Kupfer, o. ä., oder es kann damit angestrebt werden, dass das Gewicht des scheibenförmigen Körpers reduziert wird.

In der Zeichnung ist ein Ausführungsbeispiel der Erfindung dargestellt. Es zeigen:
- Fig. 1: in Schnittdarstellung eine Kupplungsvorrichtung und
- Fig. 2: ein Materialelement in Schnittdarstellung.

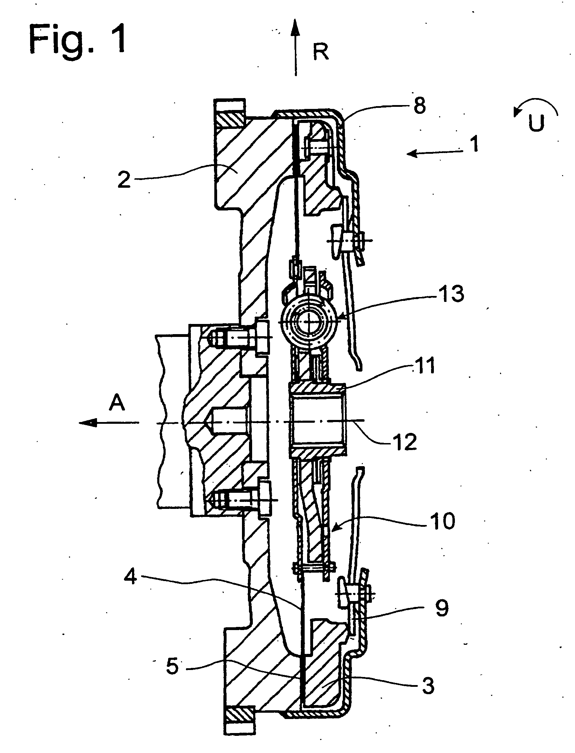

In Fig. 1 ist ein Schnitt durch eine Kupplungsvorrichtung 1 dargestellt. Diese ist über ein Schwungrad 2 mit einer nicht dargestellten Brennkraftmaschine verbunden. Die Kupplungsvorrichtung 1 weist ein Gehäuse 8 auf, in dem eine darin drehfest, aber axial verschiebbar gehaltene Anpressplatte 3 angeordnet ist, die von einer Membranfeder 9 so beaufschlagt wird, dass sie zwischen sich und dem Schwungrad 2 eine Kupplungsscheibe 10 einspannen kann, die zur Drehmomentübertragung dient. Die Kupplungsscheibe 10 ist mit einer Nabe 11 versehen, die über eine Innenverzahnung auf einer nicht dargestellten Getriebewelle drehfest aufgesetzt ist. Alle Bauteile können um die gemeinsame Drehachse 12 rotieren. Im Ausführungsbeispiel ist in die Kupplungsscheibe 10 ein Torsionsschwingungsdämpfer 13 eingesetzt. Die Kupplungsscheibe 10 weist eine Trägerscheibe 4 auf, die mit einem ringförmigen Reibelement 5 verbunden ist.

Die radiale Richtung ist mit R, die Axialrichtung mit A und die Umfangsrichtung schematisch mit U bezeichnet.

Die Trägerscheibe 4 samt Reibelement 5 und/oder das Schwungrad 2 bzw. die Anpressplatte 3 sind im Betrieb in Folge der Fliehkraft bei Rotation Spannungen ausgesetzt, die das Material aufnehmen muss, aus dem diese Bauteile bestehen. Dieses Material ist zumindest für eines der Bauteile wie nachfolgend beschrieben ausgebildet.

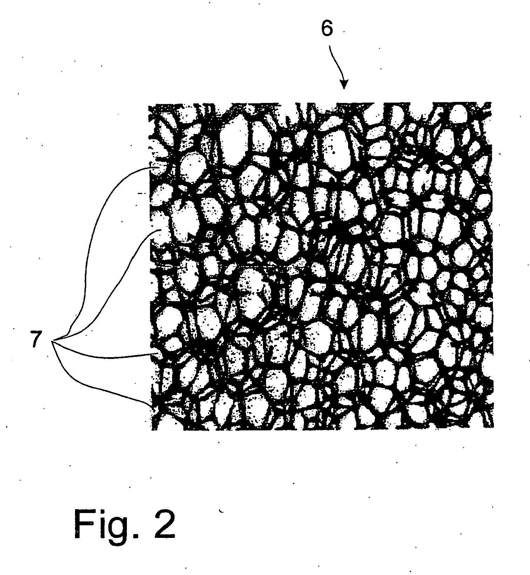

In Fig. 2 ist in vergrößerter Darstellung ein Schliffbild zu sehen, wie es sich üblicher Weise für einen Metallschwamm darstellt, der als Basismaterial für den scheibenförmigen Körper 2, 3, 4/5 eingesetzt wird. Das metallische Material 6, nämlich Stahl, ist mit einer Vielzahl von Hohlräumen bzw. Poren 7 versehen, so dass das eigentliche, hell dargestellte Metall eine Rahmen- oder Skelettstruktur bildet. Der Metallschwamm 6 ist daher im Verhältnis zu massivem Metall sehr viel leichter, was bei der Verwendung für ein fliehkraftbeaufschlagtes Bauteil in vorteilhafter Weise dazu führt, dass die entstehenden Kräfte geringer sind, die das Material aufnehmen muss.

Um das Material des scheibenförmigen Körpers 2, 3, 4/5 hinsichtlich seines thermischen Verhaltens sowie bezüglich seines Verformungs- und Festigkeitsverhaltens für die Anwendung in einer Kupplung- bzw. Bremsvorrichtung besser tauglich zu machen ― insbesondere bei Fliehkraftbelastung des Körpers ―, sind die Hohlräume 7 im Material 6 mit einem zweiten Material zumindest teilweise, vorzugsweise vollständig, gefüllt. Dabei ist in die Hohlräume ein Einlagerungsmaterial eingebracht. Als Einlagerungsmaterial hat sich dabei Aluminium, gegebenenfalls mit Keramikpartikein verstärkt, bewährt. Vorgesehen kann auch werden, dass zusätzlich oder alternativ Kohlenstoff (C) oder Kupfer (Cu) in die Hohlräume 7 eingebracht wird, um das thermische bzw. mechanische Verhalten bzw. das Verschleißverhalten des scheibenförmigen Körpers 2, 3, 4/5 zu beeinflussen.

Der Grund- oder Matrixwerkstoff 6 kann dabei gezielte Anisotropien aufweisen, um das Material in einer "Vorzugsrichtung" ― bei scheibenförmigen Körpern zumeist die radiale Richtung R - mit besonderen mechanischen Eigenschaften zu versehen.

Mit dem Erfindungsvorschlag kann der Zielkonflikt zwischen geringem Gewicht und hoher Festigkeit zwecks Erzielung einer hohen Berstfestigkeit einerseits und der Fähigkeit, Wärme gut ableiten zu können, andererseits bewältigt werden. Die aus dem erfindungsgemäßen Material gefertigten scheibenförmigen Körper für Kupplungs- oder Bremsvorrichtungen weisen damit eine erhöhte Berstfestigkeit auf bei gleichzeitig optimierter Eignung zum Abtransport von Wärme.

### Bezugszeichenliste

- 1: Kupplungs- oder Bremsvorrichtung
- 2, 3, 4: scheibenförmiger Körper
- 2: Schwungrad
- 3: Anpressplatte
- 4, 5: Kupplungsreibscheibe
- 4: Trägerscheibe
- 5: Reibelement (Reibbelag)
- 6: Material des scheibenförmigen Körpers
- 7: Hohlraum
- 8: Gehäuse
- 9: Membranfeder
- 10: Kupplungsscheibe
- 11: Nabe
- 12: Drehachse
- 13: Torsionsschwingungsdämpfer

- R: Radialrichtung
- U: Umfangsrichtung
- A: Axialrichtung

## Patentansprüche

1. Kupplungs- oder Bremsvorrichtung (1), die mindestens einen scheibenförmigen Körper (2, 3, 4) aufweist, der zur Erzeugung einer Reibkraft mit einem Reibelement (5) in Kontakt bringbar ist oder der als Reibelement (5) eingesetzt wird,
**dadurch gekennzeichnet,**
**dass** der scheibenförmige Körper (2, 3, 4) aus einem metallischen, porösen Material (6) besteht, wobei in Hohlräume (7) in diesem Material (6) mindestens ein Einlagerungsmaterial eingebracht ist.

2. Kupplungs- oder Bremsvorrichtung nach Anspruch 1, **dadurch gekennzeichnet, dass** das metallische, poröse Material (6) ein Metallschwamm ist.

3. Kupplungs- oder Bremsvorrichtung nach Anspruch 1 oder 2, **dadurch gekennzeichnet, dass** das metallische, poröse Material (6) hochfestes Material ist.

4. Kupplungs- oder Bremsvorrichtung nach Anspruch 3, **dadurch gekennzeichnet, dass** das metallische, poröse Material (6) Stahl ist.

5. Kupplungs- oder Bremsvorrichtung nach einem der Ansprüche 1 bis 4, **dadurch gekennzeichnet, dass** das Einlagerungsmaterial Leichtmetall ist oder aufweist.

6. Kupplungs- oder Bremsvorrichtung nach Anspruch 5, **dadurch gekennzeichnet, dass** das Einlagerungsmaterial eine Aluminium- oder Magnesiumverbindung ist oder aufweist.

7. Kupplungs- oder Bremsvorrichtung nach Anspruch 6, **dadurch gekennzeichnet, dass** das Einlagerungsmaterial Aluminiumoxyd (Al₂O₃) ist oder aufweist.

8. Kupplungs- oder Bremsvorrichtung nach Anspruch 6 oder 7, **dadurch gekennzeichnet, dass** das Einlagerungsmaterial eine Aluminiumlegierung ist, die Aluminiumoxyd (Al₂O₃) aufweist.

9. Kupplungs- oder Bremsvorrichtung nach Anspruch 6 oder 7, **dadurch gekennzeichnet, dass** das Einlagerungsmaterial Slizium-Carbon (SiC) aufweist.

10. Kupplungs- oder Bremsvorrichtung nach einem der Ansprüche 5 bis 9, **dadurch gekennzeichnet, dass** das Einlagerungsmaterial Kohlenstoff (C), insbesondere Graphit, aufweist.

11. Kupplungs- oder Bremsvorrichtung nach einem der Ansprüche 5 bis 10, **dadurch gekennzeichnet, dass** das Einlagerungsmaterial Kupfer (Cu) aufweist.

12. Kupplungs- oder Bremsvorrichtung nach einem der Ansprüche 1 bis 11, **dadurch gekennzeichnet, dass** das Material (6) des scheibenförmigen Körpers (2, 3, 4) anisotrop ausgebildet ist.

13. Kupplungs- oder Bremsvorrichtung nach einem der Ansprüche 1 bis 12, **dadurch gekennzeichnet, dass** der scheibenförmige Körper (2, 3, 4) das Schwungrad (2) einer Kupplungsvorrichtung (1) ist.

14. Kupplungs- oder Bremsvorrichtung nach einem der Ansprüche 1 bis 12, **dadurch gekennzeichnet, dass** der scheibenförmige Körper (2, 3, 4) die Anpressplatte (3) einer Kupplungsvorrichtung (1) ist.

15. Kupplungs- oder Bremsvorrichtung nach einem der Ansprüche 1 bis 12, **dadurch gekennzeichnet, dass** der scheibenförmige Körper (2, 3, 4) die Kupplungsreibscheibe (4, 5) einer Kupplungsvorrichtung (1) ist.

16. Kupplungs- oder Bremsvorrichtung nach einem der Ansprüche 1 bis 12, **dadurch gekennzeichnet, dass** der scheibenförmige Körper (2, 3, 4) die Bremsscheibe einer Bremsvorrichtung ist.

17. Kupplungs- oder Bremsvorrichtung nach einem der Ansprüche 1 bis 16, **dadurch gekennzeichnet, dass** der scheibenförmige Körper (2, 3, 4) aus mehreren in Umfangsrichtung aufeinanderfolgenden Bereichen gebildet wird.

18. Kupplungs- oder Bremsvorrichtung nach einem der Ansprüche 1 bis 17, **dadurch gekennzeichnet, dass** das metallische, poröse Material (6) zu einzelnen Klötzen geformt ist, die in ihrer Anordnung einen scheibenförmigen Körper (2, 3, 4) bilden.

19. Kupplungs- oder Bremsvorrichtung nach einem der Ansprüche 1 bis 18, **dadurch gekennzeichnet, dass** in das metallische, poröse Material (6) nur teilweise ein Einlagerungsmaterial eingebracht ist.

20. Kupplungs- oder Bremsvorrichtung nach einem der Ansprüche 1 bis 19, **dadurch gekennzeichnet, dass** das metallische, poröse Material (6) nur teilweise von dem Einlagerungsmaterial durchsetzt ist.

21. Kupplungs- oder Bremsvorrichtung nach einem der Ansprüche 1 bis 20, **dadurch gekennzeichnet, dass** das Material (6) auf der Reibfläche mehr Einlagerungsmaterial enthält als im übrigen Volumen des Materials (6).

22. Kupplungs- oder Bremsvorrichtung nach einem der Ansprüche 1 bis 21, **dadurch gekennzeichnet, dass** das Material (6) auf der der Reibfläche entgegengesetzten Fläche weniger Einlagerungsmaterial aufweist als im übrigen Volumen des Materials (6).

23. Kupplungs- oder Bremsvorrichtung nach einem der Ansprüche 1 bis 22, **dadurch gekennzeichnet, dass** das Material (6) in Axialrichtung ausgehend von der Reibfläche einen sich verändernden Füllungsgrad für das Einlagerungsmaterial aufweist.

24. Kupplungs- oder Bremsvorrichtung nach Anspruch 23, **dadurch gekennzeichnet, dass** der Füllungsgrad in Axialrichtung abnehmend ist.

25. Kupplungs- oder Bremsvorrichtung nach Anspruch 23, **dadurch gekennzeichnet, dass** der Füllungsgrad in Axialrichtung ansteigend ist.

## Claims

1. Clutch or brake device (1), which has at least one disc-shaped body (2, 3, 4) which, to generate a frictional force, can be brought into contact with a friction element (5) or is used as a friction element (5), **characterized in that** the disc-shaped body (2, 3, 4) consists of a metallic porous material (6), at least one intercalated material being introduced into voids (7) in this material (6).

2. Clutch or brake device according to Claim 1, **characterized in that** the metallic porous material (6) is a metal sponge.

3. Clutch or brake device according to Claim 1 or 2, **characterized in that** the metallic porous material (6) is high-strength material.

4. Clutch or brake device according to Claim 3, **characterized in that** the metallic porous material (6) is steel.

5. Clutch or brake device (1) according to one of Claims 1 to 4, **characterized in that** the intercalated material is or has light metal.

6. Clutch or brake device according to Claim 5, **characterized in that** the intercalated material is or has an aluminium or magnesium compound.

7. Clutch or brake device according to Claim 6, **characterized in that** the intercalated material is or has aluminium oxide (Al₂O₃).

8. Clutch or brake device according to Claim 6 or 7, **characterized in that** the intercalated material is an aluminium alloy which has aluminium oxide (Al₂O₃).

9. Clutch or brake device according to Claim 6 or 7, **characterized in that** the intercalated material has silicon carbon (SiC).

10. Clutch or brake device according to one of Claims 5 to 9, **characterized in that** the intercalated material has carbon (C), in particular graphite.

11. Clutch or brake device according to one of Claims 5 to 10, **characterized in that** the intercalated material has copper (Cu).

12. Clutch or brake device according to one of Claims 1 to 11, **characterized in that** the material (6) of the disc-shaped body (2, 3, 4) is designed to be anisotropic.

13. Clutch or brake device according to one of Claims 1 to 12, **characterized in that** the disc-shaped body (2, 3, 4) is the flywheel (2) of a clutch device (1).

14. Clutch or brake device according to one of Claims 1 to 12, **characterized in that** the disc-shaped body (2, 3, 4) is the pressure plate (3) of a clutch device (1).

15. Clutch or brake device according to one of Claims 1 to 12, **characterized in that** the disc-shaped body (2, 3, 4) is the clutch friction disc (4, 5) of a clutch device (1).

16. Clutch or brake device according to one of Claims 1 to 12, **characterized in that** the disc-shaped body (2, 3, 4) is the brake disc of a brake device.

17. Clutch or brake device according to one of Claims 1 to 16, **characterized in that** the disc-shaped body (2, 3, 4) is formed from a plurality of regions following one another in circumferential direction.

18. Clutch or brake device according to one of Claims 1 to 17, **characterized in that** the metallic porous material (6) is shaped into individual blocks which in their arrangement form a disc-shaped body (2, 3, 4).

19. Clutch or brake device according to one of Claims 1 to 18, **characterized in that** an intercalated material is introduced only partially into the metallic porous material (6).

20. Clutch or brake device according to one of Claims 1 to 19, **characterized in that** the metallic porous material (6) is pierced only partially by the intercalated material.

21. Clutch or brake device according to one of Claims 1 to 20, **characterized in that** the material (6) contains more intercalated material on the friction surface than in the remaining volume of the material (6).

22. Clutch or brake device according to one of Claims 1 to 21, **characterized in that** the material (6) has less intercalated material on the surface opposite to the friction surface than in the remaining volume of the material (6).

23. Clutch or brake device according to one of Claims 1 to 22, **characterized in that** the material (6) has, starting from the friction surface in the axial direction, a varying degree of filling for the intercalated material.

24. Clutch or brake device according to Claim 23, **characterized in that** the degree of filling decreases in the axial direction.

25. Clutch or brake device according to Claim 23, **characterized in that** the degree of filling rises in the axial direction.

## Revendications

1. Dispositif d'embrayage ou de frein (1), qui comprend au moins un corps en forme de disque (2, 3, 4), qui peut être mis en contact avec un élément de friction (5) pour produire une force de friction ou qui est utilisé comme élément de friction (5), **caractérisé en ce que** le corps en forme de disque (2, 3, 4) se compose d'une matière poreuse métallique (6), dans lequel on a introduit au moins une matière de dispersion dans des cavités (7) dans cette matière (6).

2. Dispositif d'embrayage ou de frein selon la revendication 1, **caractérisé en ce que** la matière poreuse métallique (6) est une éponge métallique.

3. Dispositif d'embrayage ou de frein selon la revendication 1 ou 2, **caractérisé en ce que** la matière poreuse métallique (6) est une matière à haute résistance.

4. Dispositif d'embrayage ou de frein selon la revendication 3, **caractérisé en ce que** la matière poreuse métallique (6) est un acier.

5. Dispositif d'embrayage ou de frein selon l'une quelconque des revendications 1 à 4, **caractérisé en ce que** la matière de dispersion est ou comprend un métal léger.

6. Dispositif d'embrayage ou de frein selon la revendication 5, **caractérisé en ce que** la matière de dispersion est ou comprend un alliage d'aluminium ou de magnésium.

7. Dispositif d'embrayage ou de frein selon la revendication 6, **caractérisé en ce que** la matière de dispersion est ou comprend l'oxyde d'aluminium (Al₂O₃).

8. Dispositif d'embrayage ou de frein selon la revendication 6 ou 7, **caractérisé en ce que** la matière de dispersion est un alliage d'aluminium, qui comprend de l'oxyde d'aluminium (Al₂O₃).

9. Dispositif d'embrayage ou de frein selon la revendication 6 ou 7, **caractérisé en ce que** la matière de dispersion comprend du carbure de silicium (SiC).

10. Dispositif d'embrayage ou de frein selon l'une quelconque des revendications 5 à 9, **caractérisé en ce que** la matière de dispersion comprend du carbone (C), en particulier du graphite.

11. Dispositif d'embrayage ou de frein selon l'une quelconque des revendications 5 à 10, **caractérisé en ce que** la matière de dispersion comprend du cuivre (Cu).

12. Dispositif d'embrayage ou de frein selon l'une quelconque des revendications 1 à 11, **caractérisé en ce que** la matière (6) du corps en forme de disque (2, 3, 4) est réalisée de manière anisotrope.

13. Dispositif d'embrayage ou de frein selon l'une quelconque des revendications 1 à 12, **caractérisé en ce que** le corps en forme de disque (2, 3, 4) est le volant d'inertie (2) d'un dispositif d'embrayage (1).

14. Dispositif d'embrayage ou de frein selon l'une quelconque des revendications 1 à 12, **caractérisé en ce que** le corps en forme de disque (2, 3, 4) est le plateau de pression (3) d'un dispositif d'embrayage (1).

15. Dispositif d'embrayage ou de frein selon l'une quelconque des revendications 1 à 12, **caractérisé en ce que** le corps en forme de disque (2, 3, 4) est le plateau de friction d'embrayage (4, 5) d'un dispositif d'embrayage (1).

16. Dispositif d'embrayage ou de frein selon l'une quelconque des revendications 1 à 12, **caractérisé en ce que** le corps en forme de disque (2, 3, 4) est le disque de frein d'un dispositif de frein.

17. Dispositif d'embrayage ou de frein selon l'une quelconque des revendications 1 à 16, **caractérisé en ce que** le corps en forme de disque (2, 3, 4) est formé de plusieurs zones se succédant dans la direction périphérique.

18. Dispositif d'embrayage ou de frein selon l'une quelconque des revendications 1 à 17, **caractérisé en ce que** la matière poreuse métallique (6) est moulée en blocs individuels, qui forment par leur agencement un corps en forme de disque (2, 3, 4).

19. Dispositif d'embrayage ou de frein selon l'une quelconque des revendications 1 à 18, **caractérisé en ce qu'**une matière de dispersion n'est introduite que partiellement dans la matière poreuse métallique (6).

20. Dispositif d'embrayage ou de frein selon l'une quelconque des revendications 1 à 19, **caractérisé en ce que** la matière poreuse métallique (6) n'est traversée que partiellement par la matière de dispersion.

21. Dispositif d'embrayage ou de frein selon l'une quelconque des revendications 1 à 20, **caractérisé en ce que** la matière (6) contient plus de matière de dispersion sur la surface de friction que dans le reste du volume de la matière (6).

22. Dispositif d'embrayage ou de frein selon l'une quelconque des revendications 1 à 21, **caractérisé en ce que** la matière (6) présente moins de matière de dispersion sur la surface opposée à la surface de friction que dans le reste du volume de la matière (6).

23. Dispositif d'embrayage ou de frein selon l'une quelconque des revendications 1 à 22, **caractérisé en ce que** la matière (6) présente un degré de remplissage de matière de dispersion qui varie en direction axiale à partir de la surface de friction.

24. Dispositif d'embrayage ou de frein selon la revendication 23, **caractérisé en ce que** le degré de remplissage diminue dans la direction axiale.

25. Dispositif d'embrayage ou de frein selon la revendication 23, **caractérisé en ce que** le degré de remplissage augmente en direction axiale.
